# EUROPEAN PATENT SPECIFICATION

(11) **EP 1 854 834 B1**
(45) Date of publication and mention of the grant of the patent: **24.03.2010**
(21) Application number: 06782132.2
(22) Date of filing: 02.08.2006
(51) Int. Cl.: C08J 7/12, C08J 7/06

(54) **SURFACE MODIFICATION PROCESS**
VERFAHREN ZUR OBERFLÄCHENMODIFIKATION
PROCEDE DE MODIFICATION DE SURFACE

(30) Priority: 03.08.2005 JP 2005248364
(43) Date of publication of application: 14.11.2007
(73) Proprietor: Nakata Coating Co., Ltd., Yokohama-shi, Kanagawa 240-0041 (JP)
(72) Inventor: Nakata Coating Co., Ltd., Yokohama-shi, Kanagawa 240-0041 (JP)
(74) Representative: MERH-IP Matias Erny Reichl Hoffmann
(86) International application number: PCT/JP2006/315263
(87) International publication number: WO 2007/015498

(56) References cited:
- WO-A1-2004/098792
- JP-A- 04 059 344
- JP-A- 63 209 924
- JP-A- 2001 500 552
- JP-A- 2002 053 982
- JP-A- 2003 238 710
- JP-A- 2003 326 845

## Description

### BACKGROUND OF THE INVENTION

### [Field of the Invention]

The present invention relates to a surface modification treatment which is effective for materials constituting a variety of products in the fields such as the household electric appliance/electronics field as represented by plasma and liquid crystal televisions, the information equipment field as represented by personal computers and cellular phones, or the machinery field as represented by automobiles and motorcycles.

### [Description of the Related Art]

Conventionally, thermoplastic elastomers have rubber-like properties at room temperature and are softened like thermoplastic resins when their temperature become predetermined temperatures or higher, so that molding by means of an injection molding device or the like is possible.

Additionally, olefin resins are relatively inexpensive and easy to recycle, and thus are frequently used as main materials or auxiliary materials in various products.

However, solid materials containing thermoplastic elastomers or olefin resins show the low adhesion. Moreover, when a film containing a thermosetting paint or an ultraviolet-curing paint is formed, the problem that the adhesion between a solid material and the coating film are easy to be peeled due to the insufficient adhesion, is still remained.

Then, the applicant proposes a surface treatment process for solid materials replacing conventional corona treatment, primer treatment, flame treatment, or the like (e.g., see JP-2003-238710A (Claims)).

In other words, there is proposed a surface treatment process of preparing a surface modification apparatus, and then entirely or partially blowing a silicon oxidizing flame obtained by combusting a fuel gas toward the surface of a solid material to thereby significantly improve the wettability of the treated portion. The surface modification apparatus includes a storage tank section for storing a fuel gas containing a modifying compound having a boiling point of 10°C to 100°C, a transport section for transporting the fuel gas to an ejection section, and the ejection section for blowing the flame of the fuel gas.

In addition, the applicant also proposes a surface treatment process of entirely or partially blowing a silicon oxidizing flame obtained by a fuel gas containing a silicon-containing compound having a flash point in the range of 0 to 100°C and a boiling point in the range of 105 to 250°C toward the surface of a solid material to thereby activate the blowing treated portion and improve the wettability (e.g., see WO2004-098792 (Claims)).

However, even the surface treatment processes disclosed in Patent document 1 and Patent document 2 is insufficient to improve wettability in solid materials depending on the difference of boiling points of silicon-containing compounds, environmental conditions of the surroundings (temperature, humidity) or the like, thereby remaining the problem that sufficient adhesion can not be obtained between the solid material and the coating film.

A surface modification process according to the preamble of claim 1 is known from the document EP 1 148 036 A1.

### SUMMARY OF THE INVENTION

It is an object of the present invention is to provide a surface modification process capable of achieving certain surface modification effects on any solid materials, regardless of the differences of boiling points of silicon-containing compounds or the like and environmental conditions of the surroundings, in particular low temperatures.

This object is achieved by a surface modification process as claimed in claim 1. Preferred embodiments of the invention are defined in the dependent claims.

By mixing alcohol with the modifying compound in the range of 0.01 to 20 weight% based on the total amount of the modifying compound, the combustibility and usability of the compound is improved. In other words, use of alcohol together renders easy the evaporation of the modifying compound even at low temperatures. As a result, it is visually recognized that combustibility of a flame is improved and the modifying compound is combusted together due to flame reaction of the alcohol.

Upon carrying out the surface modification process of the present invention, the hydrocarbon gas is preferably propane gas or LPG (liquefied petroleum gas other than propane gas alone).

When this kind of hydrocarbon gas is used, it is inexpensive and can be combusted at a predetermined temperature. Thus, the gas may cause a silicon-containing compound or the like to lead to stable thermal decomposition, thereby strongly and uniformly laminate, for example, predetermined silica particles having many hydroxyl groups on the surfaces on any solid materials.

Upon carrying out the surface modification process of the present invention, the modifying compound is preferably at least one compound selected from the group consisting of an alkylsilane compound, an alkoxysilane compound, a siloxane compound, a silazane compound, an alkyl-titanium compound and an alkoxy-aluminum compound.

When such kind of silicon-containing compound or the like is used, the utilization of its own vapor pressure stably evaporates itself, thereby rending easy the concentration control in the fuel gas and also lead to the stable thermal decomposition of the compound. This makes it possible to easily form predetermined silica parties or the like having many hydroxyl groups on the surfaces of any solid materials.

Upon carrying out the surface modification process of the present invention, the boiling point (760 mHg) of the modifying compound is preferably a value within the range of 20 to 250°C.

When a silicon-containing compound having such a boiling point or the like is used, the utilization of not only the evaporation heat, but a vaporizer or the like stably evaporates itself, thereby making easy the concentration control in the fuel gas. As a result, the generation of dew condensation on the basis of the temperature and concentration changes in the piping can be effectively suppressed.

Upon carrying out the surface modification process of the present invention, the content of the modifying compound is preferably a value within the range of 1 × 10⁻¹⁰ to 10 mole% based on the total amount (100 mole%) of the fuel gas.

When such a content of the modifying compound is defined, the utilization of not only the evaporation heat, but a vaporizer or the like can stably evaporates it or controls the flow rate, thereby effectively suppressing the generation of dew condensation on the basis of the temperature and concentration changes in the piping. In addition, the use of such a content of the modifying compound stably thermally decomposes the compound. Therefore, predetermined silica particles having many hydroxyl groups on the surfaces thereof and the like can be easily formed on the surface of a solid material.

Upon carrying out the surface modification process of the present invention, the sold material is preferably at least one selected from the group consisting of an olefin resin, natural rubber, synthetic rubber and a thermoplastic elastomer.

Such a kind of solid material not only has a wide variety of applications and is inexpensive, but is readily surface modified. Therefore, predetermined silica particles having many hydroxyl groups on the surfaces thereof and the like can be easily formed.

Upon carrying out the surface modification process of the present invention, the surface modification process preferably includes a step for laminating a coating film selected from the group consisting of a thermosetting paint, an ultraviolet curing paint and a thermoplastic paint, on a solid material.

Due to such constitution, a composite solid material improved in functionality and availability can be effectively provided.

Upon carrying out the surface modification process of the present invention, the surface modification process preferably includes a step for laminating a decorating layer containing a metal thin film between the solid material and the coating film.

Due to such constitution, a composite solid material having characteristics such as metallic properties and a reflection characteristic can be effectively provided.

### BRIEF DESCRIPTION OF THE DRAWINGS

- FIG. 1: is a diagram indicating a fluid flow on the basis of a surface modification apparatus;
- FIG. 2: is a diagram for explaining an aspect of a solid material (first);

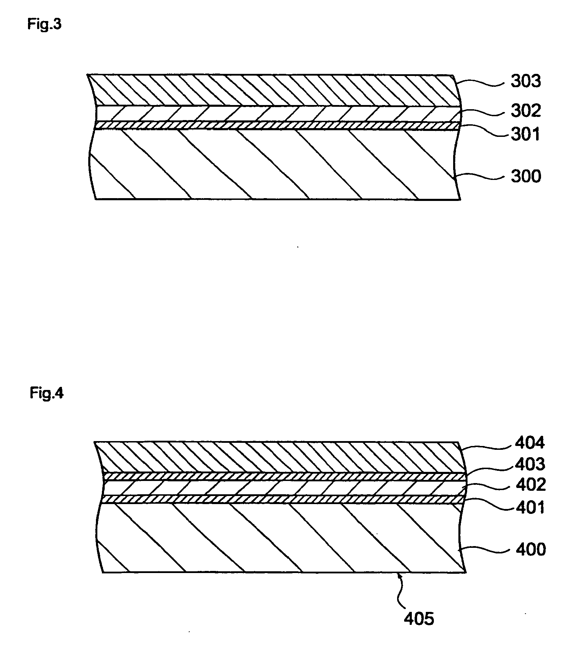

- FIG. 3: is a diagram for explaining an aspect of a solid material (second);
- FIG. 4: is a diagram for explaining an aspect of a solid material (third);
- FIGS. 5A and 5B: are diagram provided for explaining a surface modification conditions of a solid material and a predetermined silica particle having many hydroxyl groups on the surface thereof;
- FIGS. 6A to 6D: are diagrams for explaining the surface modification conditions; and
- FIG. 7: is a graph for explaining the relationship between the mixture molar ratio of air/hydrocarbon gas and the wet index.

### DESCRIPTION OF THE PREFERRED EMBODIMENT

Note that of the Examples described below, only Examples 25 to 34 fall under the scope of the claims.

### 1. Surface Modification Apparatus

### (1) Fundamental Constitution

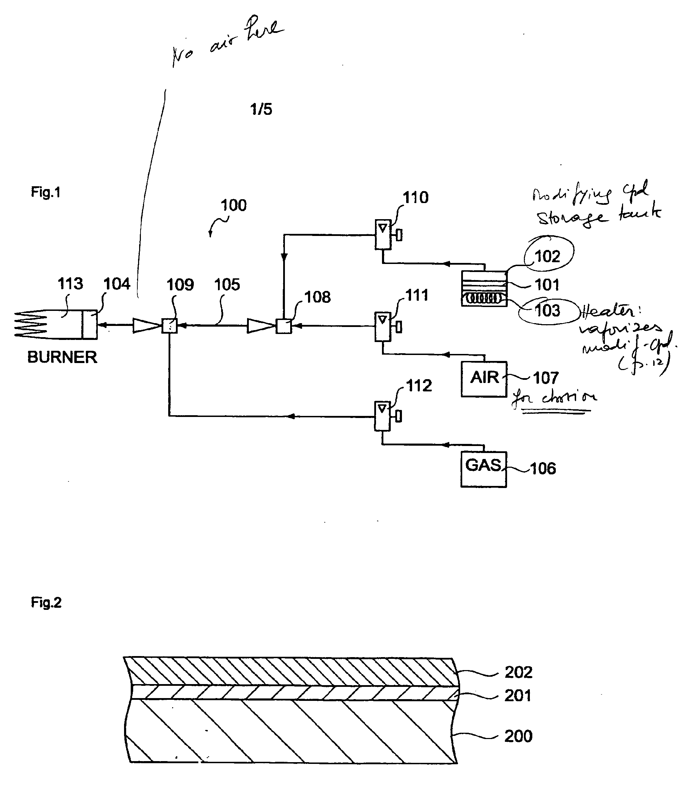

A surface modification apparatus for carrying out a surface modification process will be described with reference to a fluid flow diagram indicated in FIG. 1.

First, a surface modification apparatus 100 indicated in the fluid flow is essentially comprises a storage tank section 102, a transport path 105, a storage tank 106 for a fuel gas, and a compressed air source 107, and these components are connected by means of piping.

More specifically, the storage tank section 102 stores a modifying compound 101 including a silicon atom, titanium atom and aluminum atom, the modifying compound 101 selected from the group consisting of an alkylsilane compound, an alkoxysilane compound, a siloxane compound, a silazane compound, an alkyl-titanium compound, an alkoxy-titanium compound, an alkyl-aluminum compound and an alkoxy-aluminum compound. Therefore, when the amount of the modifying compound is decreased in a vaporizer (not shown) making use of the gas-liquid equilibrium, the modifying compound is added from the storage tank 102 in a short time.

Additionally, the vaporizer (not shown) which vaporizes the compound by heating means 103 or a natural evaporation, and utilize the gas-liquid equilibrium is arranged in the inside or outside of the storage tank 102. The heating means 103 means the inclusion of the vaporizer by natural evaporation in some cases.

The transport path 105 is piping for transporting toward an injection section (burner) 104 the modifying compound 101 vaporized by the heating means 103 or natural evaporation in the vaporizer (not shown).

The surface modification apparatus 100 is further provided with a storage tank 106 for hydrocarbon gas such as propane gas and LPG gas as described later and the compressed air source 107 for separately supplying combustion air for the hydrocarbon gas and air (carrier) for transferring a modifying compound.

At some midpoint of the transport path 105, a first mixer (may be called a sub-mixer) 108 and a second mixer (may be called a main mixer) 109 are arranged.

Here, the first mixer 108 is a mixing apparatus for uniformly mixing a modifying compound (partly including air of transportation of a vaporized modifying compound) in the vaporizer (not shown) and air supplied from the compressed air source 107 to thereby produce a primary fuel gas.

Additionally, a second mixer 109 mixes the primary fuel gas with hydrocarbon gas transported from the storage tank 106 to produce a final fuel gas (may be called a secondary fuel gas).

Furthermore, flow rate control valves 110, 111, 112 with a flow meter for controlling the flow rate of a fluid are respectively arranged in the outlets of the storage tank section 102, compressed air source 107 and storage tank 106.

### (2) Storage Tank Section

As shown in FIG. 1, below the storage tank section 102 for storing a modifying compound, the heating means 103 such as a heater for heating is placed and is configured so that the liquid modifying compound 101 at room temperature and atmospheric pressure evaporates and vaporizes.

The heating means 103 preferably has not only a heating function, but a cooling function, and its switching is controlled by the central processing unit (CPU) (not shown). In other words, the CPU is electrically connected to a liquid level sensor, a liquid temperature sensor and the like for a modifying compound, and controls the temperature of the heating means 103 and an additional supply amount from the storage tank section 102 in such a way that the liquid amount and liquid temperature of the modifying compound are maintained at a value and position within a designated range.

Additionally, for the liquid amount sensor, liquid temperature sensor and the like for a modifying compound, the amount of a modifying compound consumed per time is extremely small. Thus, the liquid amount sensors include liquid amount sensors making use of a prism sensor or ultraviolet rays, or the liquid temperature sensors include precision sensors such as a thermostat and thermocouple.

Although the first embodiment describes an example in which a liquid modifying compound is used at room temperature and atmospheric pressure, a gaseous or solid modifying compound can also be used at room temperature and atmospheric pressure.

For example, when a gaseous modifying compound is used, the storage tank section 102 is not necessarily equipped with a heater. Instead, flow rate adjusting means such as a pressure adjusting valve may be placed. Hence, the effect of the temperature of a modifying compound added to the vaporizer (not shown) from the storage tank section 102 is every small, so that a constant gas-liquid equilibrium state is readily maintained.

When a solid modifying compound is used, for example, its solid compound may be dissolved in a solvent or molten by heating, and is then made to pass through a piped liquid transfer pipe until the vicinity of a flame of the burner from the storage tank of the example to be directly delivered into the burner, thereby carrying out a predetermined surface modification treatment.

### (3) Transport Section

As partly described above, as shown in FIG. 1, the first mixer 108 is placed at some midpoint of the transport section 105. The first mixer 108 is normally a "piping" structure, for mixing combusting air supplied from the compressed air source 107 with a modifying compound vaporized and delivered from the storage tank 102.

Additionally, the second mixer 109 is placed for further uniformly mixing a mixture gas mixed by the first sub-mixer 108 with a fuel gas delivered from the storage tank 106 for a fuel gas.

### (4) Injection Section

The injection section (burner) 104 is, as shown in FIG. 1, a unit for combusting a fuel gas delivered through the transport section 105 and blowing a resulting flame 113 toward a surface to be modified (not shown).

The combustion state of such flame 113 is, as appropriate, adjusted to optimum conditions in such a manner that the degree of opening of flow rate adjusting valves 110, 111, 112 with a flowmeter placed in respective gas pipes is adjusted for the flow rate of the vaporized modifying compound 101 and the air amount for combustion delivered from the compressed air source 107, as well as the flow rate of a hydrocarbon gas delivered from the storage tank 106.

The kind of a burner in the injection section is not particularly limited, and, for example any of a premixing burner, dispersing burner, partially premixing burner, spraying burner, evaporating burner and so forth may be acceptable. The form of a burner is also not particularly limited.

### 2. Modifying Compound

### (1) Kind

The modifying compound is not particularly limited so long as it is a compound including a silicon atom, a titanium atom or an aluminum atom and can be combusted in a flame of a general gas burner.

When the availability and ease of handling are taken into account, the modifying compound is preferably, for example, at least one compound selected from the group consisting of an alkylsilane compound, an alkoxysilane compound, a siloxane compound, a silazane compound, an alkyl-titanium compound, an alkoxy-titanium compound, an alkyl-aluminum compound and an alkoxy-aluminum compound.

Here, suitable examples of the alkylsilane compound include monosilane compounds that may have a substituent, such as methyl silane, dimethyl silane, trimethyl silane, tetramethyl silane, tetraethyl silane, dimethyldichlorosilane, dimethyldiphenyl silane, diethyldichlorosilane, diethyldiphenyl silane, methyltrichlorosilane, methyltriphenyl silane and dimethyldiethyl silane; silane compounds that may have a substituent, such as hexamethyl disilane, hexaethyl disilane and chloropentamethyl disilane; and trisilane compounds that may have a substituent, such as octamethyl trisilane.

Suitable examples of the alkoxysilane compound include one single compound or combination of two or more species of methoxysilane, dimethoxysilane, trimethoxysilane, tetramethoxysilane, ethoxysilane, diethoxysilane, triethoxysilane, tetraethoxysilane, methyltrimethoxysilane, dimethyldimethoxysilane, trimethylmetoxysilane, methyltriethoxysilane, dimethyldiethoxysilane, trimethylethoxysilane, phenyltrimethoxysilane, phenyltriethoxysilane, dichlorodimethoxysilane, dichlorodiethoxysilane, diphenyldimethoxysilane, diphenyldiethoxysilane, trichloromethoxysilane, trichloroethoxysilane, triphenylmethoxysilane, and triphenylethoxysilane.

Suitable examples of the alkoxysilane compound include tetramethyl disiloxane, pentamethyl disiloxane, hexamethyl disiloxane, octamethyl trisiloxane, hexamethylcyclotrisiloxane, octamethylcyclotetrasiloxane, decamethylcyclopentasilosane, and dodecamethylcyclohexasiloxane.

Suitable examples of the silazane compound include hexamethyl disilazane.

Suitable examples of the alkyl-titanium compound include tetramethyltitanium, tetraethyltitanium and tetrapropyltitanium.

Suitable examples of the alkoxy-titanium compound include titanium methoxide and titanium ethoxide.

Suitable examples of the alkyl-aluminum compound include trimethylaluminum, triethylaluminum, and tripropylaluminum.

Suitable examples of the alkoxy-aluminum compound include aluminum methoxide and aluminum ethoxide. These compounds may be used alone or in a mixture.

Of the suitable examples of the above modifying compounds, the silane compound, alkoxysilane silane compound, siloxane compound and silazane compound are more preferred because they are readily handled and evaporated and easily available.

In particular, in silicon-containing compounds, compounds having at least one nitrogen atom, halogen atom, vinyl group or amino group within the molecule or on the molecular terminals are more preferable.

More specifically, preferable is at least one compound of hexamethyl disilazane (boiling point: 126°C), vinyltrimethoxysilane (boiling point: 123°C), vinyltriethoxysilane (boiling point: 161°C), trifluoropropyltrimethoxysilane (boiling point: 144°C), trifluoropropyltrichlorosilane (boiling point: 113 to 114°C), 3-aminopropyltrimethoxysilane (boiling point: 215°C), 3-aminopropyltriethoxysilane (boiling point: 217°C), hexamethyldisiloxane (boiling point: 100 to 101°C), and 3-chloropropyltrimethoxysilane (boiling point: 196°C).

The reason is that such silicon-containing compound improves its mixability with a carrier gas and forms a particulate matter (predetermined silica particle having many hydroxyl groups on the surface thereof) on the surface of a solid material, whereby modification is uniformly carried out. Moreover, such a silane compound tends to partially remain on the surface of the solid material due to the relations of boiling points and so forth, so that more excellent adhesion can be obtained between the solid materials and a variety of powder coating films.

### (2) Amount of Addition

The amount of addition of a silicon-containing compound and the like as a modifying compound is preferably a value within the range of 1 × 10⁻¹⁰ to 10 mole% with respect to the total amount (100 mole%) of the fuel gas.

The reason is that when the amount of addition of the silicon-containing compound and the like becomes a value less than 1 × 10⁻¹⁰ mole%, the modification effect on a solid material may not arise.

On the other hand, when the amount of addition of the silicon-containing compound and the like exceeds 10 mole%, the mixability of the silicon-containing compound and the like with air etc. is decreased, with the result that the silicon-containing compound and the like incompletely combust in some cases.

Thus, the amount of addition of the silicon-containing compound and the like are more preferably a value within the range-of 1 × 10⁻⁹ to 5 mole%, still more preferably a value within the range of 1 × 10⁻⁶ to 1 mole%, based on the total amount (100 mole%) of the fuel gas.

### 3. Air/Hydrocarbon Gas

### (1) Air

A predetermined amount of air is characteristically used because predetermined silica particles having many hydroxyl groups on the surfaces thereof and the like can be uniformly formed in addition to the temperature control of a flame and a good carrier effect.

In other words, characteristically, a predetermined amount of air is incorporated into a fuel gas and used as a part of the fuel gas for a flame, wherein the content of the air is preferably a value within the range of 80 to 99.9 mole% based on the total amount (100 mole%) of the fuel gas.

This is because, when the content of the air is less than 80 mole%, not only the combustion of the silicon-containing compound is incomplete, but the formation of hydroxyl groups is insufficient in some cases, while on the other hand, the content of the air is in excess of 99.9 mole%, the surface modification effect may be insufficient.

Therefore, the content of air is more preferably a value within the range of 90 to 99.5 mole%, still more preferably a value within the range of 93 to 99 mole%, based on the total amount (100 mole%) of the fuel gas.

Additionally, air is not only used as a carrier gas, but may be added in the final step for the fuel gas; it is allowable that the value of air/hydrocarbon gas can be finally adjusted in a predetermined range.

### (2) Hydrocarbon Gas

Upon carrying out the surface modification process, the hydrocarbon gas is preferably propane gas or a LPG (a liquid petroleum gas other than propane gas only).

The reason is that this kind of hydrocarbon gas is inexpensive and can be combusted at a predetermined temperature. Thus, a silicon-containing compound and the like are stably thermally decomposed and the predetermined silica particles having many hydroxyl groups on their surfaces can be strongly and uniformly laminated on any solid materials.

Examples of the LPG include butanes (normal butane, isobutene), a mixture gas of butane/propane, ethane, and pentanes (normal pentane, isopentane, cyclopentane).

On the other hand, the content of such hydrocarbon gas is preferably a value within the range of 0.1 to 10 mole% based on the total amount (100 mole%) of the fuel gas.

This is because, when the content of such hydrocarbon gas becomes less than 0.1 mole%, the flame temperature is decreased and not only the combustion of a silicon-containing compound and the like is incomplete, but also the formation of hydroxyl group becomes insufficient in some cases, while on the other hand, the content of such hydrocarbon gas is excess of 10 mole%, the gas combusts incompletely and similarly the surface modification effect may be insufficient.

Thus, the content of hydrocarbon gas is more preferably a value within the range of 0.5 to 8 mole%, still more preferably a value within the range of 0.8 to 5 mole%, based on the total amount (100 mole%) of the fuel gas.

### 4. Mixture Molar Ratio of Air/Hydrocarbon Gas

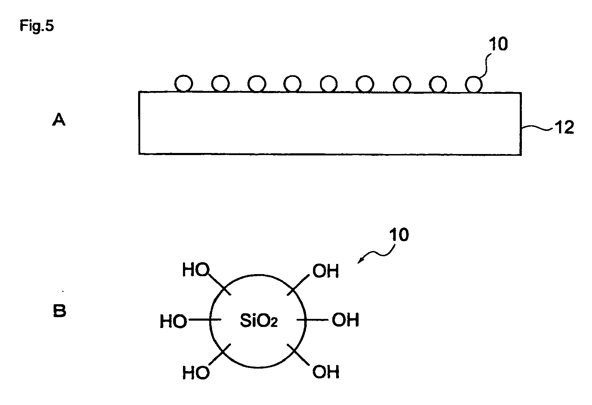

Next, the mixture molar ratio of air/hydrocarbon gas in a fuel gas will be set forth in detail with reference to FIGS. 5 to 7.

First, FIG. 5A is a schematic diagram of surface modification conditions of a solid material 12 due to predetermined silica particles 10 having many hydroxyl groups on the surfaces thereof.

Additionally, FIG. 5B is a schematic diagram of a predetermined silica particle 10 having many hydroxyl groups on the surface thereof.

More specifically, the use of a specific fuel gas makes it easy to strongly and uniformly laminate a predetermined silica particle 10 having many hydroxyl groups on the surface thereof. For this reason, a predetermined surface modification effect can be obtained on any solid materials, regardless of the differences of boiling points of silicon-containing compounds and so forth and environmental conditions of the surroundings.

The average particle size of predetermined silica particles having many hydroxyl groups on the surfaces thereof is not particularly limited and, for example it is preferably a value within the range of 0.001 to 10 µm, more preferably a value within the range of 0.01 to 2 µm, and still more preferably a value within the range of 0.05 to 0.8 µm.

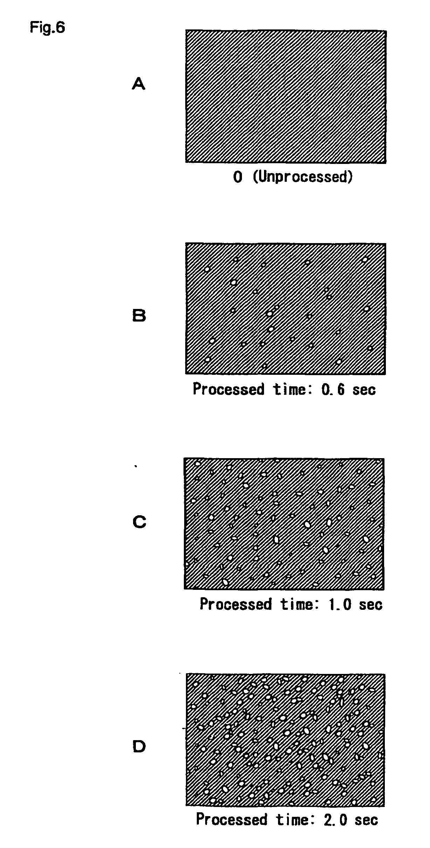

FIGS. 6A to 6D are schematic diagrams drawings of states in which the surface modification conditions due to predetermined silica particles 10 having many hydroxyl groups on the surfaces thereof change in accordance with the processing extents.

FIG. 6A indicates the surface state of a untreated polypropylene film (thickness: 50 µm), and FIG. 6B indicates a surface modification condition when the surface treatment according to Example 1 has been carried out on the film for 0.6 second.

Thus, the comparison of the both reveals that the predetermined silica particles having many hydroxyl groups on the surfaces thereof are sparsely adhered to the surface of the polypropylene film.

More specifically, the use of a specific fuel gas tends to render such predetermined silica particles having many hydroxyl groups on the surfaces thereof to be strongly and uniformly laminated on the surface of the polypropylene film. Therefore, it can be said that, regardless of the differences of boiling points of silicon-containing compounds and so forth and environmental conditions of the surroundings, a predetermined surface modification effect can be obtained even for any solid materials.

Here, FIG. 6C indicates a surface modification condition when the surface treatment according to Example 1 has been carried out for one second on the polyethylene film of FIG. 6A. Hence, the comparison of the both reveals that predetermined silica particles having many hydroxyl groups on the surfaces thereof are substantially uniformly and in a considerable amount adhered to the surface of the polypropylene film.

Further, FIG. 6D indicates a surface modification condition when the surface treatment according to Example 1 has been carried out for two seconds on the polyethylene film of FIG. 6A. Hence, the comparison of the both reveals that predetermined silica particles having many hydroxyl groups on the surfaces thereof are partially continuously and in a large amount adhered to the surface of the polypropylene film.

In other words, it is said that, when predetermined silica particles having many hydroxyl groups on the surfaces thereof are, for example, adhered in the conditions of FIGS. 6B to 6D, the wettability index value is increased and a predetermined surface modification effect is obtained.

However, the number of hydroxyl groups on the surfaces of the silica particles indicated in FIG. 6D is seen to prone to be small by means of an elemental analysis method, as compared with the numbers of the silica particles of FIGS. 6B to 6C.

Accordingly, an important matter in the present invention is that only predetermined silica particles having many hydroxyl groups on the surfaces thereof are adhered to the surface of a solid material. It can be said that even if a large number of silica particles having not many hydroxyl groups on the surfaces thereof are adhered, an excellent surface modification effect is not obtained.

The number of hydroxyl groups on the surface of a silica particle can be estimated, for example, using FT-IR. More specifically, in an infrared absorption chart obtained by FT-IR, the ratio of the peak height (P1) near 3600 cm⁻¹ assigned to free hydroxyl groups to the peak height (P2) near 3400 cm⁻¹ assigned to adsorbed water molecules is obtained. When the value is within a predetermined range, it is preferably said to obtain an excellent surface modification effect.

For example, the numeral value represented by P1/P2 is said to be preferably from about 0.2 to 1.0, more preferably from about 0.3 to 0.9, still more preferably from about 0.4 to 0.8.

Inversely, it can be said that if a numerical value of P1/P2 in such ranges is obtained, there are present at least predetermined silica particles having many hydroxyl groups on the surfaces thereof.

The number of hydroxyl groups on the surface of a silica particle can also be estimated by X-ray photoelectron spectroscopy (XPS). More specifically, if the ratio of Si:O in elemental analysis data of particle surfaces obtained by XPS is in the range of 1:2.2 to 1: 3. 2, it is said to be preferred to obtain an excellent surface modification effect since there are many hydroxyl groups on the surface of a silica particle.

Thus, it can be said that the ratio of Si:O is more preferably within the range of 1:2.5 to 1:3.0, still more preferably within the range of 1:2.6 to 1:2.9.

Inversely, it can be said that if a ratio of Si:O in such ranges is obtained, there are present at least predetermined silica particles having many hydroxyl groups on the surfaces thereof.

Data of C (carbon) is also obtained at same time in elemental analysis data of particle surfaces obtained by XPS. In this case, it can be further estimated that when the ratio of Si:C is in the range of 1:0.0001 to 0.1, the data are not attributable to the number of carboxyl groups on the surface of a silica particle, but are attributable to many hydroxyl groups.

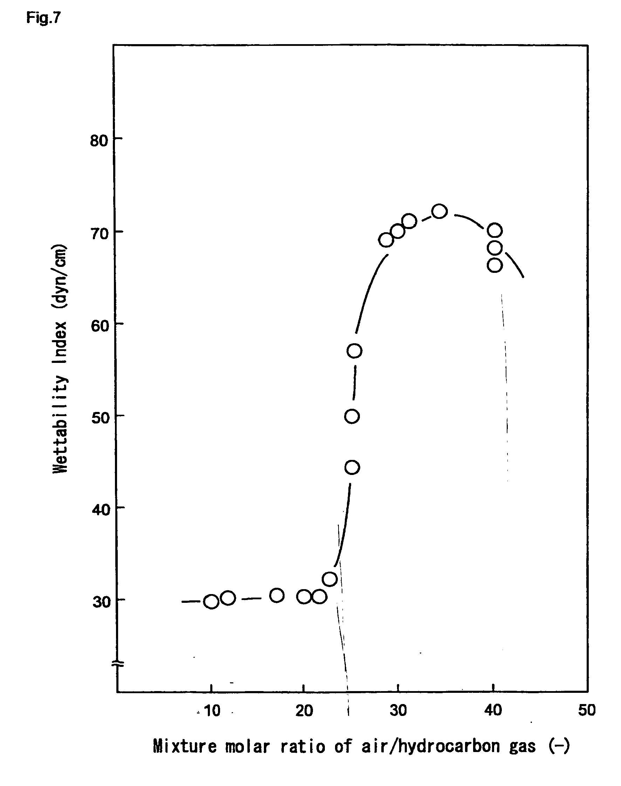

Next, the reason why the mixture molar ratio of air/hydrocarbon gas in a fuel gas is set to 23 or more will be set forth in more detail with reference to FIG. 7.

Here, FIG. 7 shows data according to Example 1 and so forth. The mixture molar ratio (-) of air/hydrocarbon gas is taken in the abscissa and the wettability index (dyn/cm) on the surface of the polypropylene film is taken in the ordinate.

As is understood from FIG. 7, when the mixture molar ratio of air/hydrocarbon gas is from about 10 to 20, the surface modification effect is rarely obtained. In other words, although the surface treatment is carried out, only a value of about 30 dyn/cm of being a wettability index to untreated polypropylene is obtained.

Next, when the mixture molar ratio of air/hydrocarbon gas becomes in the range of about 20 exclusive to 22, the value of the wettability index is slightly prone to increase. However, the value is about 30 dyn/cm and its increment is small, so that it is understood that the surface modification effect is not obtained yet.

When the mixture molar ratio of air/hydrocarbon gas becomes in the range of about 23 to 25, on the other hand, the wettability index is remarkably increased and becomes from about 45 to 58 dyn/cm, so that it is understood that a predetermined surface modification effect is obtained.

Furthermore, when the mixture molar ratio of air/hydrocarbon gas becomes in the range of about 25 to 38, the wettability index is further remarkably increased and becomes from about 70 to 72 dyn/cm, and thus, it is understood that an excellent surface modification effect is stably obtained.

Hence, FIG. 7 shows that when the mixture molar ratio of air/hydrocarbon gas in a fuel gas becomes less than 23, the surface modification effect does not stably arise, or a flame is liable to go out, or incomplete combustion occurs, so that the range is not preferable.

However, when the mixture molar ratio of air/hydrocarbon gas is in excess of 40, inversely, the resulting wettability index value is seen to liable to slightly vary. This seems to be because, in the relation of the mixture molar ratio of air/hydrocarbon gas, the flame is not stable when air is present in a greatly excessive amount.

Accordingly, the use of a fuel gas having a mixture molar ratio of air/hydrocarbon gas of 23 or more makes it possible to strongly and uniformly laminate predetermined silica particles having many hydroxyl groups on their surfaces for any solid materials, regardless of the differences of boiling points of silicon-containing compounds and the like and environmental conditions of the surroundings. Therefore, even when a coating film containing a thermosetting resin paint or an ultraviolet-ray curing paint is formed on a surface-treated solid material, excellent adhesion can be obtained between the solid material and the coating film.

However, in consideration of a small variation and more stable surface modification effect, the mixture molar ratio of air/hydrocarbon gas in a fuel gas is more preferably set to a value within the range of 24 to 45, still more preferably set to a value within the range of 25 to 38, yet more preferably set to a value within the range of 28 to 35.

### 5. Surface treatment Conditions

### (1) Flame Temperature

For the surface treatment conditions, the flame temperature is preferably set to a value within the range of 500 to 1,500°C.

This is because, when the flame temperature becomes a value of less than 500°C, it may become difficult to effectively prevent the incomplete combustion of a silicon-containing compound, while on the other hand, the flame temperature exceeds 1,500°C, a solid material targeted to be surface modified is sometimes heat deformed, or heat deteriorated, so that the kind of usable solid materials may be excessively restrained.

Therefore, the flame temperature is preferably set to a value within the range of 550 to 1,200°C, more preferably set to a value within the range of 600 to 900°C.

### (2) Treating Time

The time of blowing a flame (injection time) is preferably set to a valu within the range of 0.1 sec to 100 sec per area (100 cm²).

This is because, when the injection time becomes less than 0.1 sec, the modification effect caused by a silicon-containing compound and the like is not uniformly arisen in some cases, while on the other hand, when the injection time exceeds 100 sec, a solid material targeted to be surface modified is sometimes heat deformed, or heat deteriorated, so that the kind of usable solid materials may be excessively restrained.

Therefore, the injection time is preferably set to a value within the range of 0.3 to 30 sec per area (100 cm²), more preferably set to a value within the range of 0.5 to 20 sec per area (100 cm²)

### EXAMPLES

### [Example 1]

### 1. Surface Modification Process

### (1) Surface modification treatment

Example 1 is an example of surface modification using silicone rubber having a thickness of 1 mm as a flexible, hardly adhesive solid material.

First, silicone rubber having a size 10 × 10 cm² and a thickness of 1 mm was prepared as a solid material. Its surface layer was sufficiently cleaned with isopropyl alcohol (IPA).

Next, the silicone rubber was surface modified under the following modifying conditions using the surface modification apparatus 100 shown in FIG. 1 to form a surface modified layer 201 having a thickness of nm order on the surface of silicone rubber 200, as shown in FIG. 2. The surface modified layer 201 is actually a discontinuous layer.

### (Surface Modification Conditions)

Kind of modifying compound: tetramethylsilane (boiling point: 27°C)
Discharge amount of air-containing modifying compound: 1.3 (liter/min)
Fuel gas: propane gas
Air flow rate (Air): 84 (liter/min)
Gas flow rate (LPG): 3.0 (liter/min)
Mixture molar ratio of air/hydrocarbon gas: 28
Treating time: 5 sec/100 cm²
Environmental conditions: 25°C, 50% Rh
Assuming that the total amount of an air-containing modifying compound is set to 100 mole%, the content of a modifying compound is about 0.0002 mole%. The content of a modifying compound is set to the same value, hereinafter.

### (2) Coating film Formation

Next, on top of the surface modified layer formed on the surface of the silicone rubber, applied was a polyurethane acrylate UV curing paint IMS-007 (manufactured by Isimat Japan Co., Ltd.) using polyurethane acrylate as a prepolymer.

Thereafter, the UV curing paint was ultraviolet-ray cured by use of an ultraviolet irradiation apparatus (exposure amount: 800 mJ/cm², UV lamp) to form a coating film having a thickness of 15 µm.

Use of the above UV curing paint made the coating film a clear flexible decorated layer 202, as shown in FIG. 2.

### 2. Evaluation

### (1) Adhesion

The cross-cut adhesion test (JIS Standard) was carried out on the basis of the following criteria to evaluate the adhesion between the silicone rubber as a solid material and the coating films.

Very good: There are no peelings at all by the cross-cut adhesion test (100 grids, JIS Standard).

Good: There are 3 or less peelings by the cross-cut adhesion test (100 grids, JIS Standard).

Fair: There are 10 or less peelings by the cross-cut adhesion test (100 grids, JIS Standard).

Bad: There are 10 or more peelings by the cross-cut adhesion test (100 grids, JIS Standard).

### (2) Environmental Characteristics

The surface modification treatment as described above was carried out except that the environmental conditions when the surface modification treatment was performed were at 40°C and 95% Rh, to evaluate the adhesion as environmental characteristics in accordance with the following criteria.

Very good: There are no peelings at all by the cross-cut adhesion test (100 grids, JIS Standard).

Good: There are 3 or less peelings by the cross-cut adhesion test (100 grids, JIS Standard).

Fair: There are 10 or less peelings by the cross-cut adhesion test (100 grids, JIS Standard).

Bad: There are 10 or more peelings by the cross-cut adhesion test (100 grids, JIS Standard).

**[Table 1]**

| Example | Air (L/min) | LPG (L/min) | Air/LPG (-) | Adhesion | Environmental characteristics | Notes |
|---|---|---|---|---|---|---|
| Comparative Example 1 | 60.0 | 3.0 | 20.0 | Bad | Bad | Flame; flame off |
| Example 5 | 75.0 | 3.0 | 25.0 | Good | Fair | Flame: normal |
| Example 1 | 84.0 | 3.0 | 28.0 | Good | Good | Flame: normal |
| Example 2 | 90.0 | 3.0 | 30.0 | Good | Good | Flame: normal |
| Example 3 | 105.0 | 3.0 | 35.0 | Very good | Very good | Flame: unstable |
| Example 4 | 120.0 | 3.0 | 40.0 | Fair | Fair | Flame: unstable |

### [Examples 2 to 5 and Comparative Example 1]

In Examples 2 to 5, and Comparative Example 1, the mixture molar ratio (20 to 40) of air/hydrocarbon gas (LPG) in a fuel gas was changed, and the adhesion and environmental characteristics were evaluated as in Example 1. The results obtained are shown in Table 1.

### [Examples 6 to 10 and Comparative Example 2]

In Examples 6 to 10, and Comparative Example 2, the surface modification process was carried out in the same manner as in Example 1 and the like except that a thermoplastic polyester elastomer (TPEE) piece having a size of 10 × 10 cm² and a thickness of 1 mm was used instead of the silicone rubber used in Example 1 and the like, to evaluate the adhesion and environmental characteristics.

**[Table 2]**

| Example | Air (L/min) | LPG (L/min) | Air/LPG (-) | Adhesion | Humidity test | Notes |
|---|---|---|---|---|---|---|
| Comparative Example 2 | 60.0 | 3.0 | 20.0 | Bad | Bad | Flame: flame off |
| Example 6 | 75.0 | 3.0 | 25.0 | Good | Far | Flame; normal |
| Example 7 | 84.0 | 3.0 | 28.0 | Good | Good | Flame: normal |
| Example 8 | 90. 0 | 3.0 | 30. 0 | Good | Good | Flame: norma |
| Example 9 | 105.0 | 3.0 | 35.0 | Very good | Very good | Flame: unstable |
| Example 10 | 120.0 | 3.0 | 40.0 | Fair | Fair | Flame: unstable |

### [Examples 11 to 14 and Comparative Examples 3 and 4]

In Examples 11 to 14, and Comparative Examples 3 and 4, the surface modification process was carried out in the same manner as in Example 1 and the like except that ethylene propylene rubber (EPDM) having a size of 10 × 10 cm² and a thickness of 1 mm was used instead of the silicone rubber used in Example 1 and the like, to evaluate the adhesion and environmental characteristics. The results obtained are shown in Table 3.

**[Table 3]**

| Example | Air (L/min) | LPG (L/min) | Air/LPG (-) | Adhesion | Humidity test | Notes |
|---|---|---|---|---|---|---|
| Comparative Example 3 | 46.0 | 2.1 | 17.0 | Bad | Bad | Flame: flame off |
| Comparative Example 4 | 57.5 | 2.7 | 21.3 | Bad | Bad | Fleme: normal |
| Example 11 | 69.0 | 2.7 | 25.0 | Good | Fair | Flame: norma |
| Example 12 | 90.0 | 2.7 | 25.6 | Good | Good | Flame: norma |
| Example 13 | 80.5 | 2.7 | 29.8 | Very good | Very good | Flame: unstable |
| Example 14 | 108.0 | 2.7 | 40.0 | Fair | Fair | Flame: unstable |

### [Examples 15 to 19 and Comparative Example 5]

In Examples 15 to 19, and Comparative Example 5, the adhesion and environmental characteristics were evaluated in the same manner as in Example 1 and the like except that hexamethyldisiloxane (boiling point: 100 to 101 °C) was used as a modifying compound instead of the tetramethylsilane compound. The results obtained are shown in Table 4. Additionally, the flow rates of air and LPG were totally slightly decreased as compared with those of Example 1 and so forth.

**[Table 4]**

| Example | Air (L/min) | LPG (L/min) | Air/LPG (-) | Adhesion | Humidity test | Notes |
|---|---|---|---|---|---|---|
| Comparative Example 5 | 54.0 | 2.7 | 20.0 | Bad | Bad | Flame: flame off |
| Example 15 | 67.6 | 2.7 | 25.0 | Good | Fair | Flame: norma |
| Example 16 | 75.6 | 2.7 | 28.0 | Good | Good | Flame: normal |
| Example 17 | 81.0 | 2.7 | 30.0 | Good | Good | Flame: normal |
| Example 18 | 94.5 | 2.7 | 35.0 | Very good | Very good | Flame: unstable |
| Example 19 | 108.0 | 2.7 | 40.0 | Fair | Fair | Flame: unstable |

### [Examples 20 to 24 and Comparative Example 6]

In Examples 20 to 24, and Comparative Example 6, the adhesion and environmental characteristics were evaluated in the same manner as in Example 1 and the like except that hexamethyldisilazane (boiling point: 123°C) was used as a modifying compound instead of the tetramethylsilane compound. The results obtained are shown in Table 5.

**[Table 5]**

| Example a | Air (L/min) | LPG (L/min) | Air/LPG (-) | Adhesion | Humidity test | Notes |
|---|---|---|---|---|---|---|
| comparative Example 6 | 54.0 | 2.7 | 20.0 | Bad | Bad | Flame: flame off |
| Example 20 | 67.5 | 2.7 | 25.0 | Good | Fair | Flame: normal |
| Example 21 | 75.6 | 2.7 | 28.0 | Good | Good | Flame: normal |
| Example 22 | 81.0 | 2.7 | 30.0 | Good | Good | Flame: normal |
| Example 23 | 94.5 | 2.7 | 35.0 | Very good | Very good | Flame: unstable |
| Example 24 | 108.0 | 2.7 | 40.0 | Fair | Fair | Flame: unstable |

### [Examples 25 to 29 and Comparative Example 7]

In Examples 25 to 29, and Comparative Example 7, the adhesion and environmental characteristics were evaluated in the same manner as in Example 1 and the like except that a tetramethylsilane/ethyl alcohol mixture (specific gravity ratio 99:1) was used as a modifying compound instead of the tetramethylsilane compound. The results obtained are shown in Table 6.

Alcohol was mixed with the modifying compound in a predetermined amount, for example, in the range of 0.01 to 20 weight % based on the total amount of the modifying compound, to thereby improve combustibility and usability of the silane compound.

In other words, use of alcohol together renders easy the evaporation of the silane compound as a modifying compound even at low temperature. As a result, it is visually recognized that combustibility of a flame is improved and the silane compound is combusted together due to flame reaction of the alcohol.

**[Table 6]**

| Examp 19 | Air (L/min) | LPG (L/min) | Air/LPG (-) | Adhesion | Humidity test | Notes |
|---|---|---|---|---|---|---|
| Comparative Example 7 | 60.0 | 3.0 | 20.0 | Bad | Bad | Flame: flame off |
| Example 25 | 75.0 | 3.0 | 25.0 | Good | Fair | Flame: norma |
| Example 26 | 84.0 | 3.0 | 28.0 | Good | Good | Flame: normal |
| Example 27 | 90.0 | 3.0 | 30.0 | Good | Good | Flame: normal |
| Example 28 | 105.0 | 3.0 | 35.0 | Very good | Very good | Flame: unstable |
| Example 29 | 120.0 | 3.0 | 40.0 | Fair | Fair | Flame: unstable |

### [Examples 30 to 34 and Comparative Example 8]

In Examples 30 to 34 and Comparative Example 8, the adhesion and environmental characteristics were evaluated in the same manner as in Example 1 and the like except that a hexamethyldisiloxane/ethyl alcohol mixture (specific gravity ratio 99:1) was used as a modifying compound instead of the tetramethylsilane compound. The results obtained are shown in Table 7.

**[Table 7]**

| Example | Air (L/min) | LPG (L/min) | Air/LPG (-) | Adhesion | Humidity test | Notes |
|---|---|---|---|---|---|---|
| Comparative Example 8 | 54.0 | 2.7 | 20.0 | Bad | Bad | Flame: flame off |
| Example 30 | 67.5 | 2.7 | 25.0 | Good | Fair | Flame: normal |
| Example 31 | 75.6 | 2.7 | 28.0 | Good | Good | Flame: normal |
| Example 32 | 81.0 | 2.7 | 30.0 | Good | Good | Flame: normal |
| Example 33 | 94.5 | 2.7 | 35. 0 | Very good | Very good | Flame: unstable |
| Example 34 | 108.0 | 2.7 | 40.0 | Fair | Fair | Flame: unstable |

### [Example 35]

### 1. Surface Modification Process

In Example 35, evaluated was a laminate having a coating film comprised of a moisture curing urethane paint (Silver metallic: IMS-007, manufactured by Isimat Japan Co., Ltd.) produced between the surface modified layer and the coating film produced from an ultraviolet-ray curing paint.

More specifically, a thermoplastic polyester elastomer (TPEE) having a size 10 × 10 cm² and a thickness of 1 mm was prepared as a solid material 300 and its surface layer was sufficiently cleaned with isopropyl alcohol (IPA).

Next, surface modification treatment was carried out in the same manner as in Example 1 to form a surface modified layer 301 on the surface of the solid material 300.

Then, the moisture curing urethane paint (Silver metallic: IMS-007, manufactured by Isimat Japan Co., Ltd.) was applied onto the surface modified layer 301, and then the coated face was curing reacted at 60°C for 40 min to form a silver metallic, flexible decorated layer 302.

Subsequently, onto the upper layer of the flexible decorated layer 302, applied was a clear polyurethane acrylate UV curing paint (IMS-007: manufactured by Isimat Japan Co., Ltd.) using polyurethane acrylate as a prepolymer. Then, the UV curing paint was ultraviolet-ray cured by an ultraviolet-ray irradiation apparatus (exposure amount: 800 mJ/cm², UV lamp) to form a coating film having a thickness of 15 µm.

Thus, the curing reactions were unified to form a composite laminate having the silver metallic, flexible decorated layer 302.

### 2. Evaluation

The adhesion by the cross-cut adhesion test (JIS Standard) and the adhesion by the moisture test were evaluated as in Example 1 for the composite laminate obtained.

As a result, it has been ascertained that, regardless of environmental conditions (25°C, 50% Rh; 40°C, 95% Rh) when surface modification treatment is implemented, the composite laminate having the coating film comprised of the moisture curing urethane paint produced between the surface modified layer and the ultraviolet-ray curing paint also exhibits excellent adhesion by the cross-cut adhesion test (there are no peelings at all by the cross-cut adhesion test (100 grids)).

### [Example 36]

### 1. Surface Modification Process

In Example 36, the surface modification effect was evaluated on a laminate containing a metal vapor deposition layer 403.

More specifically, silicone rubber having a size 10 × 10 cm² and a thickness of 1 mm was prepared as a solid material 400 and its surface layer was sufficiently cleaned with isopropyl alcohol (IPA).

Next, surface modification treatment was carried out in the same manner as in Example 1 to form a surface modified layer 401 on the surface of the solid material 400.

Then, a clear moisture curing urethane paint (IMS-007: manufactured by Isimat Japan Co., Ltd.) was applied onto the surface modified layer 401, and then the coated face was curing reacted at 60°C for 40 min to form a clear, flexible decorated layer 402.

Subsequently, the side of a non-modified face 405 of the solid material 400 that was surface modified was aged with an aluminum foil or the like, and the solid material 400 having unified therewith the clear, flexible intermediate layer 402 was introduced into a separately prepared metal vapor evaporation apparatus (not shown). In this state, on the upper layer of the clear, flexible intermediate layer 402, a metal vapor evaporation layer 403 comprised of aluminum with a thickness of 5000 angstroms was vapor evaporated by use of a vapor evaporation apparatus.

Finally, a clear moisture curing polyurethane resin layer 404 (IMS-101: manufactured by Isimat Japan Co., Ltd.) was applied from above the metal vapor evaporation layer 403 using a coating apparatus, and then the resulting laminate was dried by heating at 80°C for 30 min to obtain a composite flexible structure having a decorated layer as a metal vapor evaporation layer.

Additionally, although Example 36 described a metal vapor evaporation layer by way of an example of an aluminum metal vapor evaporation layer, other metal thin film coating methods that can be utilized include, for example, an ion plating method, plating method, and non-electrolysis plating method. Moreover, the metal for coating is not limited to aluminum, and gold, silver, nickel, or the like can be selected as well.

### 2. Evaluation

The adhesion by the cross-cut adhesion test (JIS Standard) and the adhesion by the moisture test were evaluated in the same manner as in Example 1 for the composite laminate obtained.

As a result, it has been ascertained that, regardless of environmental conditions (25°C, 50% Rh; 40°C, 95% Rh) when surface modification treatment is implemented, the composite laminate having the metal vapor evaporation and the like also exhibits excellent adhesion by means of the cross-cut adhesion test (there are no peelings at all by the cross-cut adhesion test (100 grids)).

### [Industrial Applicability]

According to the present invention, a flame produced from a fuel gas with the controlled mixture molar ratio of air/hydrocarbon gas, including a predetermined modifying compound, is blown toward the surface of a solid material to make it possible to strongly and uniformly laminate predetermined silica particles having many hydroxyl groups on the surfaces thereof, even on any solid materials, regardless of the differences of boiling points of modifying compounds and environmental conditions of the surroundings.

Accordingly, when a coating film containing a thermosetting resin paint or an ultraviolet-ray curing paint is formed, excellent adhesion can be obtained between the solid material and the coating film, regardless of changes of various environmental conditions.

Moreover, according to the present invention, when a coating film is formed on a solid material surface, a general thermosetting paint, thermoplastic paint or the like can be directly used without use of a specially modified UV curing paint, so that the invention is extremely advantageous from viewpoints of economy, production management, and so forth.

## Claims

1. A surface modification process, comprising:
blowing a flame of a fuel gas including a modifying compound containing a silicon atom, air, a hydrocarbon gas such as propane gas or LPG and alcohol toward the surface of the solid material to modify the surface of a solid material, wherein
the content of the hydrocarbon gas is set to a value within the range of 0.1 to 5 mole% with respect to the total amount (100 mole%) of the fuel gas,
the mixture molar ratio of air/hydrocarbon gas in the fuel gas is set to a value of 25 to 40, **characterized in that**
the modifying compound includes 0.01 to 20 weight% relative to the total amount of the modifying compound of alcohol, and
the modifying compound is tetramethylsilane or hexamethyldisiloxane.

2. The surface modification process according to claim 1, wherein the additional amount of the compound containing silicon is set to a value within the range of 1 * 10⁻¹⁰ to 10 mole% with respect to the total amount (100 mole%) of the fuel gas.

3. The surface modification process according to any one of claims 1 to 2, wherein the solid material is at least one compound selected from the group consisting of an olefin resin, natural rubber, synthetic rubber and a thermoplastic elastomer.

4. The surface modification process according to any one of claims 1 to 3, wherein a step for laminating a decorating layer containing a metal thin film and a step for laminating a coating film selected from the group consisting of a thermosetting paint, an ultraviolet curing paint and a thermoplastic paint on the solid material are included.

## Patentansprüche

1. Verfahren zur Oberflächenmodifikation, mit:
Blasen einer Flamme eines Brenngases einschließlich einer modifizierenden Verbindung, die ein Siliciumatom, Luft, ein Kohlenwasserstoffgas, wie etwa Propangas oder LPG, und Alkohol enthält, in Richtung der Oberfläche des Feststoffs zur Modifizierung der Oberfläche eines Feststoffs, wobei
der Gehalt des Kohlenwasserstoffgases auf einen Wert im Bereich von 0,1 bis 5 Mol-% bezüglich der Gesamtmenge (100 Mol-%) des Brenngases eingestellt ist,
das Molverhältnis des Gemisches von Luft/Kohlenwasserstoffgas in dem Brenngas auf einen Wert von 25 bis 40 eingestellt ist, **dadurch gekennzeichnet, dass**
die modifizierende Verbindung 0,01 bis 20 Gew.-% im Verhältnis zur Gesamtmenge der modifizierenden Verbindung von Alkohol beinhaltet, und
die modifizierende Verbindung Tetramethylsilan oder Hexamethyldisiloxan ist.

2. Verfahren zur Oberflächenmodifikation nach Anspruch 1, wobei die zusätzliche Menge der Silicium enthaltenden Verbindung auf einen Wert im Bereich von 1 * 10⁻¹⁰ bis 10 Mol-% bezüglich der Gesamtmenge (100 Mol-%) des Brenngases eingestellt ist.

3. Verfahren zur Oberflächenmodifikation nach irgendeinem der Ansprüche 1 bis 2, wobei der Feststoff mindestens eine Verbindung ist, die ausgewählt ist aus der Gruppe bestehend aus einem Olefinharz, Naturkautschuk, synthetischem Kautschuk und einem thermoplastischen Elastomer.

4. Verfahren zur Oberflächenmodifikation nach irgendeinem der Ansprüche 1 bis 3, wobei ein Schritt zum Laminieren einer schmückenden Schicht, die eine dünne Metallschicht enthält, und ein Schritt zum Laminieren einer Überzugsschicht, die ausgewählt ist aus der Gruppe bestehend aus einem wärmehärtbaren Lack, einem Ultravioletthärtungslack und einem thermoplastischen Lack, auf den Feststoff eingeschlossen sind.

## Revendications

1. Procédé de modification de surface, comprenant :
la projection d'une flamme d'un gaz combustible comprenant un composé modificateur contenant un atome de silicium, de l'air, un hydrocarbure gazeux tel que le propane gazeux ou le GPL et alcool vers la surface du matériau solide pour modifier la surface d'un matériau solide, dans lequel
la teneur en hydrocarbure gazeux est réglée à une valeur comprise dans l'intervalle de 0,1 à 5 % en moles par rapport à la quantité totale (100 % en moles) du gaz combustible, le rapport molaire du mélange air/hydrocarbure gazeux dans le gaz combustible est réglé à une valeur de 25 à 40, **caractérisé en ce que**
le composé modificateur comprend 0,01 à 20 % en poids d'alcool par rapport à la quantité totale du composé modificateur, et
le composé modificateur est le tétraméthylsilane ou l'hexaméthyldisiloxane.

2. Procédé de modification de surface selon la revendication 1, dans lequel la quantité additionnelle du composé contenant du silicium est réglée à une valeur comprise dans l'intervalle de 1 * 10⁻¹⁰ à 10 % en moles par rapport à la quantité totale (100 % en moles) du gaz combustible.

3. Procédé de modification de surface selon l'une quelconque des revendications 1 à 2, dans lequel le matériau solide est au moins un composé choisi dans le groupe formé par une résine oléfinique, le caoutchouc naturel, un caoutchouc synthétique et un élastomère thermoplastique.

4. Procédé de modification de surface selon l'une quelconque des revendications 1 à 3, dans lequel sont incluses une étape de stratification d'une couche décorative contenant un mince film métallique et une étape de stratification d'un film de revêtement choisi dans le groupe formé par une peinture thermodurcissable, une peinture durcissable aux ultraviolets et une peinture thermoplastique sur le matériau solide.
